# EUROPÄISCHE PATENTSCHRIFT

(11) **EP 2 833 598 B1**
(45) Veröffentlichungstag und Bekanntmachung des Hinweises auf die Patenterteilung: **28.06.2017**
(21) Anmeldenummer: 14002597.4
(22) Anmeldetag: 25.07.2014
(51) Int. Cl.: H04L 29/06, H04M 1/725, H04W 4/00, H04W 8/18

(54) **Übermittlung einer Zugangskennung**
Transmission of an access identifier
Transmission d'un code d'accès

(30) Priorität: 31.07.2013 DE 102013012791
(43) Veröffentlichungstag der Anmeldung: 04.02.2015
(73) Patentinhaber: Giesecke & Devrient GmbH, 81677 München (DE)
(72) Erfinder: Auer, Martin, 84076 Pfeffenhausen (DE); Leibner, Torsten, 81739 München (DE)

(56) Entgegenhaltungen:
- US-A1- 2012 254 031
- US-A1- 2013 152 185
- HUN-WOOK KIM ET AL: "Symmetric Encryption in RFID Authentication Protocol for Strong Location Privacy and Forward-Security", INTERNATIONAL CONFERENCE ON HYBRID INFORMATION TECHNOLOGY (ICHIT), 9. November 2006 (2006-11-09), Seiten 718-723, XP032070247, DOI: 10.1109/ICHIT.2006.253688 ISBN: 978-0-7695-2674-4

## Beschreibung

Die vorliegende Erfindung betrifft ein Verfahren zum Übertragen einer Zugangskennung an ein Telekommunikationsgerät mittels einer Serviceeinrichtung.

### Stand der Technik

Im Stand der Technik sind tragbare Sicherheitselemente, insbesondere Wertkarten, Kreditkarten, Bankkarten, Scheckkarten usw. bekannt, bei welchen es erforderlich ist eine Zugangskennung, etwa eine Geheimzahl oder PIN einzugeben, um mit diesen Karten Transaktionen, wie beispielsweise das Abheben von Bargeld am Geldautomaten durchzuführen,. Diese Zugangskennung wird dem Benutzer des tragbaren Sicherheitselements in der Regel mitgeteilt, indem ihm diese per Post und/ oder per Kurznachricht (SMS) übermittelt wird. Die Übermittlung der Zugangskennung per Post bedingt, dass der Brief auf dem Postweg abhandenkommen kann, eine gewisse Zeit braucht, bis er an den Empfänger zugestellt werden kann und für das Porto relativ hohe Gebühren anfallen. Bei der Zustellung der PIN per Kurznachricht (SMS) an den Benutzer ist es nachteilig, dass Kurznachrichten unverschlüsselt versendet werden und somit die Gefahr besteht, dass ein Dritter die SMS-Nachricht abhört. Zusätzlich kann der Benutzer die SMS in seinem Mobilfunkgerät abspeichern. Dies kann dazu führen, dass ein Dritter, der das Mobilfunkgerät findet, eine gespeicherte PIN böswilliger Weise in Kombination mit dem tragbaren Sicherheitselement verwenden kann. Auch erhält der Versender einer Kurznachricht keine Bestätigung, ob der Empfänger diese wirklich erhalten hat. Somit weiß der Versender nicht, ob die Kurznachricht wirklich beim Empfänger angekommen ist.

Ferner ist aus der WO 2007/036341 A1 ein Verfahren zum Entsperren einer mittels einer Zugangskennung des Benutzers gesperrten Mobilfunkkarte bekannt. Bei diesem Verfahren wird automatisch ein Zugang für den Benutzer auf der Mobilfunkkarte auf Veranlassung einer Serviceeinrichtung eingerichtet, um es dem Benutzer nach einer mehrmaligen falschen Eingabe der PIN der Mobilfunkkarte zu ermöglichen, einen Entsperrmodus zu initiieren und eine gesperrte Mobilfunkkarte zu entsperren.

Weiterhin ist aus der WO 2007/036340 A1 ein Verfahren zum Hinterlegen einer Zugangskennung einer Mobilfunkkarte bei einer Serviceeinrichtung (Provider) bekannt, welches es ermöglicht, eine Mobilfunkkarte nach einer mehrmaligen Falscheingabe der PIN zu entsperren, indem die abgespeicherte Zugangskennung abgerufen wird.

Diese beiden letztgenannten Lösungen beruhen auf dem Prinzip, das Freischalten einer Mobilfunkkarte (SIM-Karte) nach einer mehrmaligen Falscheingabe der PIN (Personal Identification Number) zu ermöglichen.

Aus der US 2013/0152185 A1 geht ein Verfahren hervor, mit welchem es möglich ist Authentifizierungsdaten von einem Sicherheitstoken an eine mobile Einrichtung, insbesondere ein Mobiltelefon, kontaktlos zu übertragen. Die Authentifizierungsdaten können in dem Mobiltelefon gespeichert werden und für Transaktionen verwendet werden.

### Darstellung der Erfindung

Der Erfindung liegt die Aufgabe zugrunde, ein Verfahren zum Übertragen einer Zugangskennung an ein Telekommunikationsgerät zur Verfügung zu stellen, das die bekannten Probleme aus dem Stand der Technik löst und ferner dazu geeignet ist, eine sichere und effiziente Übertragung einer Zugangskennung eines tragbaren Sicherheitselements zu leisten.

Die Lösung der Aufgabe erfolgt durch ein Verfahren zum Übertragen einer Zugangskennung an ein Telekommunikationsgerät mit den Merkmalen des unabhängigen Anspruchs 1 und durch die Verwendung eines Telekommunikationsgeräts bzw. einer Serviceeinrichtung in einem erfindungsgemäßen Verfahren. Bevorzugte Ausgestaltungen des erfindungsgemäßen Verfahrens ergeben sich aus den Unteransprüchen.

Die Erfindung basiert auf dem Gedanken, ein tragbares Sicherheitselement mit einer kontaktlosen Schnittstelle zu versehen und das tragbare Sicherheitselement und ein Telekommunikationsgerät über diese Schnittstelle zu koppeln, um so eine Zugangskennung des tragbaren Sicherheitselements an das Telekommunikationsgerät zu übertragen.

Demgemäß weißt das erfindungsgemäße Verfahren zum Übertragen einer Zugangskennung an ein Telekommunikationsgerät auf das Herstellen einer ersten Kommunikationsverbindung zwischen einem Telekommunikationsgerät und einem tragbaren Sicherheitselement über eine Luftschnittstelle, das Übertragen von sicherheitselementspezifischen Daten an das Telekommunikationsgerät mittels der ersten Kommunikationsverbindung, das Übertragen von sicherheitselementspezifischen Daten und telekommunikationsgerätspezifischen Daten von dem Telekommunikationsgerät an eine Serviceeinrichtung mittels einer zweiten Kommunikationsverbindung, und das Übertragen einer Zugangskennung des tragbaren Sicherheitselements von der Serviceeinrichtung an das Telekommunikationsgerät mittels der zweiten Kommunikationsverbindung, falls der Serviceeinrichtung die Kombination aus den sicherheitselementspezifischen Daten und den telekommunikationsgerätspezifischen Daten bekannt ist.

Gemäß der Erfindung umfasst der Begriff "Zugangskennung" jede Art von Daten, die einem tragbaren Sicherheitselement zugeordnet sind und die beispielsweise dazu erforderlich sind, um mittels des tragbaren Sicherheitselements eine Transaktion, wie beispielsweise das Abheben von Geld an einem Automaten, zu authentisieren.

Ein "tragbares Sicherheitselement" im Sinne der Erfindung ist jede Art von tragbarer Datenträger oder Wertkarte, mit dem/ der es möglich ist, einen Dienst zu erbringen. Beispiele eines tragbaren Sicherheitselements sind Kreditkarten, Girokarten, EC-Karten, Gesundheitskarten, Chipkarten, Sicherheitsmodule sowie jede Art von tragbarem Datenträger, der dazu verwendet werden kann, Zugang zu bestimmten Diensten, wie beispielsweise einem Carsharing-Angebot, zu erhalten.

Ein "Telekommunikationsgerät" kann ein Mobilfunkgerät (Handy), ein mit einer Mobilfunkeinrichtung versehener Tablet-PC oder dergleichen sein.

Mit dem erfindungsgemäßen Verfahren ist es nach dem Herstellen einer Kommunikationsverbindung, beispielsweise mittels Nahfeldkommunikation (NFC), besonders vorteilhaft möglich, eine Zugangskennung eines tragbaren Sicherheitselements an das Telekommunikationsgerät zu übertragen. Auf diese Weise entfällt ein kosten- und zeitintensiver Versand der Zugangskennung per Post. Ferner ist das erfindungsgemäße Verfahren sehr sicher, da zumindest eine doppelte Absicherung erfolgt, indem in einem ersten Schritt eine erste Kommunikationsverbindung zwischen Telekommunikationsgerät und tragbarem Sicherheitselement und anschließend eine zweite Telekommunikationsverbindung zwischen Telekommunikationsgerät und Serviceeinrichtung hergestellt wird. Auf diese Weise kann beim anschließenden Übertragen der Zugangskennung ein hohes Maß an Sicherheit gewährleistet werden, da das Übertragen der Zugangskennung - gemäß einer bevorzugten Ausführungsform - verschlüsselt erfolgen kann. Ein weiterer Vorteil ist, dass das Übertragen der Zugangskennung in Echtzeit erfolgt und die Serviceeinrichtung somit in der Lage ist unmittelbar zu überwachen, ob ein Benutzer die Zugangskennung korrekt erhalten hat. Im Gegensatz zur Verteilung der Zugangskennung per SMS erschließen sich hier weitere Vorteile, da die Serviceeinrichtung beim Versenden von SMS keine automatische Rückmeldung erhält, ob der Benutzer tatsächlich die per SMS gesendete Zugangskennung erhalten hat. Bei dem erfindungsgemäßen Verfahren kann hingegen eine Rückmeldung erfolgen, ob die Übertragung der Zugangskennung an das Telekommunikationsgerät erfolgreich war.

Die zu übertragenden sicherheitselementspezifischen Daten können beispielsweise eine Kartenidentifizierungsnummer, den Namen des Kartenhalters, etc. umfassen. Die telekommunikationsgerätspezifischen Daten können Daten umfassen, die eine eindeutige Identifizierung des Telekommunikationsgeräts und/ oder der (eingelegten) SIM-Karte ermöglichen. Beispiele hierfür sind die MSISDN (Mobile Subscriber Integrated Services Digital Network Number), die IMEI (International Mobile Station Equipment Identity), und/ oder die IMSI (International Mobile Subscriber Identity).

Die zweite Kommunikationsverbindung erfolgt in der Regel über das Mobilfunknetz (beispielsweise GSM und/ oder UMTS). Alternative Übertragungsarten, wie beispielsweise per W-LAN, sind ebenfalls möglich.

Gemäß einer Ausführungsform kann das Übertragen der sicherheitselementspezifischen Daten an das Telekommunikationsgerät verschlüsselt erfolgen. Dazu eignen sich sämtliche bekannten symmetrischen und asymmetrischen Verschlüsselungsverfahren. Die Luftschnittstelle kann bei der Übertragung als Nahfeldkommunikationsschnittstelle (NFC) ausgebildet sein. Dies ist vorteilhaft, weil NFC aufgrund seiner relativ geringen Übertragungsreichweite von ca. 10 cm als sehr sicher gilt; dadurch sind Störer/ Angreifer nicht in der Lage unbemerkt ausreichend nah an eine der übertragenden Einrichtungen (Telekommunikationsgerät und/ oder tragbares Sicherheitselement) zu gelangen, um die mittels der ersten Kommunikationsverbindung übertragenen Daten abzuhören.

Eine Serviceeinrichtung im Sinne der Erfindung kann ein Mobilfunkanbieter (Provider) und/ oder ein Hersteller bzw. Verwalter von tragbaren Sicherheitselementen sein. In dem Fall, dass es sich um einen Hersteller bzw. Verwalter von tragbaren Sicherheitselementen handelt, muss sichergestellt werden, dass die Daten entweder direkt mittels der zweiten Kommunikationsverbindung an den Hersteller bzw. Verwalter von tragbaren Sicherheitselementen oder über den Mobilfunkanbieter an den Hersteller bzw. Verwalter von tragbaren Sicherheitselementen übertragen werden.

Gemäß einer weiteren besonders bevorzugten Ausführungsform erfolgt das Übertragen der Zugangskennung des tragbaren Sicherheitselements an das Telekommunikationsgerät verschlüsselt. Auf diese Weise kann stets sichergestellt werden, dass es für Dritte nicht möglich ist, die Datenübertragung "abzuhören" und auf diese Weise die Zugangskennung zu erhalten.

Gemäß einer weiteren bevorzugten Ausführungsform der Erfindung wird die Zugangskennung in einer gesicherten Umgebung des Telekommunikationsgeräts gespeichert. Eine gesicherte Umgebung kann beispielsweise durch ein Sicherheitselement umgesetzt werden, welches entweder hardwaremäßig oder softwaremäßig ausgebildet ist. Ein hardwaremäßig ausgebildetes Sicherheitselement kann beispielsweise eine entfernbare oder fest verbaute SIM-Karte, ein USB-Token oder dergleichen sein. Ein softwaremäßig ausgebildetes Sicherheitselement kann beispielsweise ein durch geeignete programmiertechnische Maßnahmen modifizierter Speicherbereich sein, in dem die Zugangskennung mittels einer weiteren Verschlüsselung oder dergleichen besonders sicher gespeichert wird.

Um die Sicherheit weiter zu erhöhen, kann es erforderlich sein, zum Abrufen der gespeicherten Zugangskennung die erste Kommunikationsverbindung zwischen dem Telekommunikationsgerät und dem tragbaren Sicherheitselement erneut herzustellen. Erst dann wird die Zugangskennung beispielsweise auf einer Anzeigeeinrichtung des Telekommunikationsgeräts dargestellt. Auf diese Weise erhöht sich die Sicherheit beim Abrufen der in der gesicherten Umgebung des Telekommunikationsgeräts gespeicherten Zugangskennung wesentlich.

Gemäß einer weiteren bevorzugten Ausführungsform ist vorgesehen, dass zum Übertragen der sicherheitselementspezifischen Daten und/ oder der telekommunikationsgerätspezifischen Daten (mittels der zweiten Kommunikationsverbindung) eine Authentisierung zwischen dem Telekommunikationsgerät und der Serviceeinrichtung erforderlich ist. Zum Authentisieren kann beispielsweise ein vorab zwischen dem Telekommunikationsgerät und der Serviceeinrichtung festgelegter Schlüssel verwendet werden. Auf diese Weise erhöht sich die Sicherheit der Datenübertragung wesentlich.

Das erfindungsgemäße Verfahren eignet sich besonders vorteilhaft zur Verwendung in einem Telekommunikationsgerät, um nach der Übertragung der sicherheitselementspezifischen Daten und der telekommunikationsgerätspezifischen Daten die Zugangskennung des tragbaren Sicherheitselements von der Serviceeinrichtung zu erhalten.

Ferner eignet sich das erfindungsgemäße Verfahren besonders zur Verwendung in einer Serviceeinrichtung, um nach dem Erhalt der sicherheitselementspezifischen Daten und der telekommunikationsgerätspezifischen Daten die Zugangskennung (des tragbaren Sicherheitselements) an das Telekommunikationsgerät zu senden.

### Kurze Beschreibung der Zeichnungen

Nachfolgend wird die Erfindung anhand beispielhaft in den Zeichnungen dargestellter Ausführungsbeispiele näher erläutert. Es zeigen:
- Fig. 1: die in einem erfindungsgemäßen Verfahren eingesetzten Komponenten sowie den Datenfluss in dem erfindungsgemäßen Verfahren, und
- Fig. 2: ein Flussdiagramm mit den wesentlichen Schritten des erfindungsgemäßen Verfahrens.

### Beschreibung bevorzugter Ausführungsformen der Erfindung

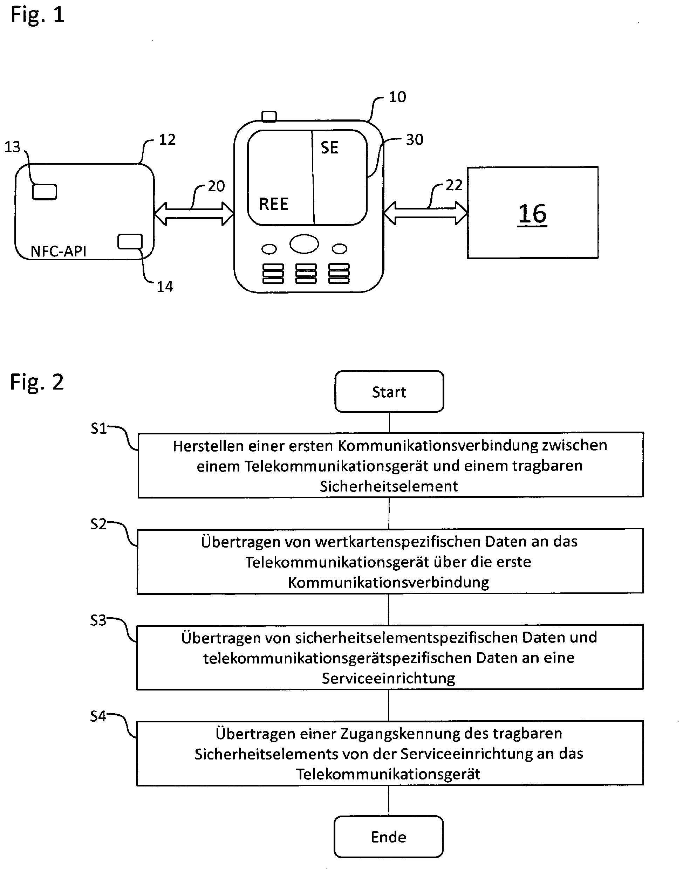

In Fig. 1 sind die in einem erfindungsgemäßen Verfahren eingesetzten Komponenten sowie der zwischen diesen stattfindende Datenfluss schematisch aufgezeigt und in Fig. 2 ist der Ablauf eines erfindungsgemäßen Verfahrens in Form eines Flussdiagramms dargestellt.

In Fig. 1 sind ein tragbares Sicherheitselement 12, ein Telekommunikationsgerät 10 und eine Serviceeinrichtung 16 gezeigt. Bei dem tragbaren Sicherheitselement 12 handelt es sich beispielsweise um eine Kreditkarte, EC-Karte, Gesundheitskarte, Chipkarte, Sicherheitsmodul oder dergleichen. Im Ausführungsbeispiel ist das tragbare Sicherheitselement 12 eine sogenannte Dual-Interface-Karte, die über zumindest zwei Schnittstellen verfügt. Die erste Schnittstelle ist eine kontaktbehaftete Schnittstelle 13. Über diese erfolgt ein galvanischer Kontakt mit einer externen Einrichtung, beispielsweise einem Kartenleseterminal (nicht gezeigt), durch direktes Kontaktieren. Alternativ kann die erste Schnittstelle eine beliebige andere Schnittstelle sein. Die zweite Schnittstelle 14 ist eine Kontaklosschnittstelle. Sie ist in dem gezeigten Ausführungsbeispiel als kontaktlose NFC-Schnittstelle (Nahfeldkommunikationsschnittstelle) ausgebildet. Mit der zweiten Schnittstelle 14 kann eine erste Kommunikationsverbindung 20 zwischen einem Telekommunikationsgerät 10 und dem tragbaren Sicherheitselement 12 hergestellt werden. In anderen Worten handelt es sich bei der ersten Kommunikationsverbindung 20 um eine kontaktlose Verbindung zwischen der zweiten Schnittstelle 14 und dem Telekommunikationsgerät 10 über eine Luftschnittstelle.

Verfahrensgemäß wird in einem ersten Schritt S1 (siehe Fig. 2) zunächst über NFC eine erste Kommunikationsverbindung 20 zwischen dem tragbaren Sicherheitselement 12 und dem Telekommunikationsgerät 10 hergestellt. Dies erfolgt, indem das tragbare Sicherheitselement 12, insbesondere die NFC-Schnittstelle 14 (NFC-API) in die Nähe einer NFC-Schnittstelle (nicht gezeigt) des Telekommunikationsgeräts 10 gebracht wird. Anschließend werden mittels der ersten Kommunikationsverbindung 20 per NFC sicherheitselementspezifische Daten - sogenannte Credentials - des tragbaren Sicherheitselements 12 an das Telekommunikationsgerät 10 übertragen (Schritt S2). In diesen sicherheitselementspezifischen Daten kann beispielsweise eine das tragbare Sicherheitselement 12 eindeutig identifizierende Nummer, der Name des Inhabers des tragbaren Sicherheitselements, das Gültigkeitsdatum des tragbaren Sicherheitselements usw. enthalten sein. Die Übertragung der Daten kann verschlüsselt - symmetrisch oder asymmetrisch - erfolgen.

In einem nächsten Schritt S3 wird eine zweite Kommunikationsverbindung 22 zwischen dem Telekommunikationsgerät 10 und der Serviceeinrichtung 16 aufgebaut. Über diese zweite Kommunikationsverbindung 22 werden sowohl die sicherheitselementspezifischen Daten, die mittels der ersten Kommunikationsverbindung 20 an das Telekommunikationsgerät 10 übertragen wurden, als auch telekommunikationsgerätspezifische Daten, wie beispielsweise die MSISDN, die IMEI und/ oder die IMSI, an eine Serviceeinrichtung 16 übertragen.

Die Serviceeinrichtung 16 kann beispielsweise ein Mobilfunkanbieter und/ oder ein Hersteller bzw. Verwalter von tragbaren Sicherheitselementen sein. Die Übertragung der Daten über die zweite Kommunikationsverbindung 22 erfolgt bevorzugt über eine Mobilfunkverbindung, insbesondere über GSM oder UMTS. Alternativ kann es sich bei der zweiten Kommunikationsverbindung 22 auch um eine drahtlose Internetverbindung (W-LAN) handeln.

Sowohl das Aufbauen der ersten Kommunikationsverbindung 20 als auch das Aufbauen der zweiten Kommunikationsverbindung 22 kann dadurch initiiert werden, dass auf dem Telekommunikationsgerät 10 eine Anwendung (Applikation) oder Softwareroutine aufgerufen wird, welche ihrerseits die beiden Kommunikationsverbindungen 20, 22 nacheinander aufruft und die erforderlichen Daten übermittelt. Anstatt des Aufrufens einer Anwendung zum Initiieren der Datenübertragung kann das Herstellen bzw. Initiieren der Kommunikationsverbindungen 20,22 auch in eine bereits bestehende Bankapplikation eines Geldinstituts oder dergleichen integriert werden.

Die Serviceeinrichtung 16 überprüft, ob sie zu der Kombination aus den sicherheitselementspezifischen Daten des tragbaren Sicherheitselements 12 und den telekommunikationsgerätspezifischen Daten des Telekommunikationsgeräts 10 eine zugehörige Zugangskennung für das tragbaren Sicherheitselement 12 vorliegen hat. Um eine Verbindung bzw. Verknüpfung zwischen tragbarem Sicherheitselement 12 und Kommunikationsgerät 10 zu schaffen, kann ein Benutzer beispielsweise bei der Beantragung des tragbaren Sicherheitselements 12 eine MSISDN eines in dem erfindungsgemäßen Verfahren einzusetzenden Telekommunikationsgerätes 10 angeben. Sowie die sicherheitselementspezifischen Daten und die zugehörige MSISDN des Telekommunikationsgeräts 10 mittels der zweiten Kommunikationsverbindung 22 an die Serviceeinrichtung 16 übertragen wurden bzw. dort angekommen sind, kann die Serviceeinrichtung 16 den Daten eine entsprechende Zugangskennung zuordnen und diese Zugangskennung von der Serviceeinrichtung 16 über die zweite Kommunikationsverbindung 22 an das Telekommunikationsgerät 10 übertragen.

Die Übertragung der Daten über die zweite Kommunikationsverbindung 22 kann ebenfalls verschlüsselt und in einer gesicherten Umgebung erfolgen. Die gesicherte Umgebung kann beispielsweise auf einem besonderen, eigenständigen Sicherheitselement realisiert sein und von einem Trusted Security Manager (TSM) gehandhabt werden. Zusätzlich ist es möglich, die an das Telekommunikationsgerät 10 übertragenen Daten in einem gesicherten Bereich (SE; Secure Element) des Telekommunikationsgeräts 10 zu speichern. Dies hat zum Vorteil, dass der Benutzer die Zugangskennung des tragbaren Sicherheitselements 12 nach erfolgreicher Übertragung der Zugangskennung an das Telekommunikationsgerät 10 auch betrachten kann, wenn keine Datenverbindung zu der Serviceeinrichtung 16 besteht, d.h. bei unterbrochener zweiter Kommunikationsverbindung 22. Das sichere Element bzw. der gesicherte Bereich können unterschiedliche Formfaktoren haben: ein fest im Telekommunikationsgerät 10 eingebauter Chip, eine entsprechend ausgerüstete SIM-Karte, oder eine in das Telekommunikationsgerät 10 einsteckbare microSD-Karte speziell für diesen Zweck.

Die Zugangskennung kann mittels der Anzeigeeinrichtung 30 des Telekommunikationsgeräts 10 angezeigt werden.

Zur weiteren Erhöhung der Sicherheit beim erneuten Anzeigen der auf dem Telekommunikationsgerät 10 gespeicherten Zugangskennung des tragbaren Sicherheitselements 12 mittels der Anzeigeeinrichtung 30 kann vorgesehen sein, dass erneut die erste Kommunikationsverbindung 20 hergestellt werden muss, indem die Nahfeldkommunikationsschnittstelle 14 des tragbaren Sicherheitselements 12 in die Nähe des Telekommunikationsgeräts 10 gebracht wird. Nur wenn die erste Kommunikationsverbindung 20 besteht, wird die Zugangskennung auf der Anzeigeeinrichtung 30 des Telekommunikationsgeräts 10 angezeigt.

Zusammenfassend lassen sich die Grundschritte des erfindungsgemäßen Verfahrens wie folgt darstellen (siehe Fig. 2):
Zunächst wird in einem ersten Schritt S1 eine Kommunikationsverbindung 20 zwischen einem Telekommunikationsgerät 10 und einem tragbaren Sicherheitselement 12 hergestellt. Diese erste Kommunikationsverbindung 20 kann beispielsweise mittels Nahfeldkommunikation(NFC) hergestellt werden.

Anschließend werden in einem nächsten Schritt S2 sicherheitselementspezifische Daten, wie beispielsweise die Identifizierungsnummer des tragbaren Sicherheitselements 12, an das Telekommunikationsgerät 10 über die erste Kommunikationsverbindung 20 übertragen. Die Übertragung kann verschlüsselt erfolgen.

Danach werden in einem dritten Schritt S3 die sicherheitselementspezifischen Daten und telekommunikationsgerätspezifische Daten, wie beispielsweise die MSISDN, die IMEI und/oder die IMSI, an eine Serviceeinrichtung 16 über eine zweite Kommunikationsverbindung 22 übertragen.

Die Serviceeinrichtung16 prüft, ob eine Zugangskennung zu der Kombination aus sicherheitselementspezifischen Daten und telekommunikationsgerätspezifischen Daten bei ihr hinterlegt ist. Ist das der Fall sendet sie in einem nächsten Schritt S4 die Zugangskennung an das Telekommunikationsgerät 10. Dort kann die Zugangskennung in einer gesicherten Umgebung gespeichert werden und - auch ohne Bestehen der zweiten Kommunikationsverbindung 22 - auf der Anzeigeeinrichtung 30 des Telekommunikationsgeräts 10 dargestellt werden. Eine gesicherte Umgebung kann hardwaremäßig oder softwaremäßig ausgebildet sein. Ein hardwaremäßig ausgebildetes Sicherheitselement kann beispielsweise eine entfernbare oder fest verbaute SIM-Karte, ein USB-Token oder dergleichen sein. Ein softwaremäßig ausgebildetes Sicherheitselement kann beispielsweise ein durch geeignete programmiertechnische Maßnahmen modifizierter Speicherbereich (SE; Secure Element) sein, in dem die Zugangskennung mittels einer weiteren Verschlüsselung oder dergleichen besonders sicher gespeichert ist.

### Bezugszeichenliste:

- 10: Telekommunikationsgerät
- 12: Sicherheitselement
- 13: erste Schnittstelle
- 14: zweite Schnittstelle
- 16: Serviceeinrichtung
- 20: erste Kommunikationsverbindung
- 22: zweite Kommunikationsverbindung
- 30: Anzeigeeinrichtung
- S1-S4: Verfahrensschritte

## Patentansprüche

1. Verfahren zum Übertragen einer Zugangskennung an ein Telekommunikationsgerät, aufweisend die folgenden Schritte:
- Herstellen einer ersten Kommunikationsverbindung (20) zwischen einem Telekommunikationsgerät (10) und einem tragbaren Sicherheitselement (12) über eine Luftschnittstelle,
- Übertragen von sicherheitselementspezifischen Daten von dem Sicherheitselement (12) an das Telekommunikationsgerät (10) mittels der ersten Kommunikationsverbindung (20),
- Übertragen von sicherheitselementspezifischen Daten des Sicherheitselements (12) und telekommunikationsgerätspezifischen Daten des Telekommunikationsgeräts (10) von dem Telekommunikationsgerät (10) an eine Serviceeinrichtung (16) mittels einer zweiten Kommunikationsverbindung (22), und
- Übertragen einer Zugangskennung des tragbaren Sicherheitselements (12) von der Serviceeinrichtung (16) an das Telekommunikationsgerät (10), wobei die Zugangskennung auf einer Anzeigeeinrichtung (30) des Telekommunikationsgerätes (10) dargestellt wird.

2. Verfahren nach Anspruch 1, **dadurch gekennzeichnet, dass** die Luftschnittstelle bei der ersten Kommunikationsverbindung (20) eine Nahfeldkommunikationsverbindung ist.

3. Verfahren nach Anspruch 1 oder 2, **dadurch gekennzeichnet, dass** das Übertragen der sicherheitselementspezifischen Daten an das Telekommunikationsgerät (10) verschlüsselt erfolgt.

4. Verfahren nach einem der vorhergehenden Ansprüche, **dadurch gekennzeichnet, dass** die Serviceeinrichtung (16) einen Mobilfunkanbieter und/ oder einen Hersteller bzw. Verwalter von tragbaren Sicherheitselementen umfasst.

5. Verfahren nach einem der vorhergehenden Ansprüche, **dadurch gekennzeichnet, dass** die telekommunikationsgerätspezifischen Daten die MSISDN, die IMEI und/ oder die IMSI des Telekommunikationsgerätes (10), insbesondere einer darin angeordneten SIM-Karte, umfassen.

6. Verfahren nach einem der vorhergehenden Ansprüche, **dadurch gekennzeichnet, dass** das Übertragen der Zugangskennung des tragbaren Sicherheitselements (12) an das Telekommunikationsgerät (10) verschlüsselt erfolgt.

7. Verfahren nach einem der vorhergehenden Ansprüche, **dadurch gekennzeichnet, dass** die Zugangskennung in einer gesicherten Umgebung des Telekommunikationsgerätes (10) gespeichert wird.

8. Verfahren nach Anspruch 7, **dadurch gekennzeichnet, dass** zum Abrufen der gespeicherten Zugangskennung das Herstellen der ersten Kommunikationsverbindung (20) zwischen dem Telekommunikationsgerät (10) und dem tragbaren Sicherheitselement (12) über die Luftschnittstelle erforderlich ist.

9. Verfahren nach einem der vorhergehenden Ansprüche, **dadurch gekennzeichnet, dass** vor dem Übertragen der sicherheitselementspezifischen Daten und/oder der telekommunikationsgerätspezifischen Daten an die Serviceeinrichtung (16) eine Authentisierung erforderlich ist.

## Claims

1. A method for transmitting an access identification to a telecommunication terminal, having the following steps of:
- establishing a first communication connection (20) between a telecommunication terminal (10) and a portable security element (12) via an over-the-air interface,
- transmitting security-element specific data from the security element (12) to the telecommunication terminal (10) by means of the first communication connection (20),
- transmitting security-element specific data of the security element (12) and telecommunication-terminal specific data of the telecommunication terminal (10) from the telecommunication terminal (10) to a service facility (16) by means of a second communication connection (22), and
- transmitting an access identification of the portable security element (12) from the service facility (16) to the telecommunication terminal (10), wherein the access identification is represented on a display facility (30) of the telecommunication terminal (10).

2. The method according to claim 1, **characterized in that** the over-the-air interface of the first communication connection (20) is a near-field communication connection.

3. The method according to claim 1 or 2, **characterized in that** the transmission of the security-element specific data to the telecommunication terminal (10) is effected in encrypted fashion.

4. The method according to any of the preceding claims, **characterized in that** the service facility (16) includes a mobile communication provider and/or a manufacturer or administrator of portable security elements.

5. The method according to any of the preceding claims, **characterized in that** the telecommunication-terminal specific data include the MSISDN, the IMEI and/or the IMSI of the telecommunication terminal (10), in particular of a SIM card arranged therein.

6. The method according to any of the preceding claims, **characterized in that** the transmission of the access identification of the portable security element (12) to the telecommunication terminal (10) is effected in encrypted fashion.

7. The method according to any of the preceding claims, **characterized in that** the access identification is stored in a secure environment of the telecommunication terminal (10).

8. The method according to claim 7, **characterized in that** for retrieving the stored access identification it is required to establish the first communication connection (20) between the telecommunication terminal (10) and the portable security element (12) via the over-the-air interface.

9. The method according to any of the preceding claims, **characterized in that** an authentication is required before transmitting the security-element specific data and/or the telecommunication-terminal specific data to the service facility (16).

## Revendications

1. Procédé de transmission d'un identifiant d'accès à un appareil de télécommunication, comprenant les étapes suivantes :
- établissement d'une première liaison de communication (20) entre un appareil de télécommunication (10) et un élément de sécurité portable (12) par l'intermédiaire d'une interface radio,
- transmission de données spécifiques à l'élément de sécurité depuis l'élément de sécurité (12) à l'appareil de télécommunication (10) au moyen de la première liaison de communication (20),
- transmission de données spécifiques à l'élément de sécurité de l'élément de sécurité (12) et de données spécifiques à l'appareil de télécommunication de l'appareil de télécommunication (10) depuis l'appareil de télécommunication (10) à l'équipement de service (16) au moyen d'une deuxième liaison de communication (22), et
- transmission d'un identifiant d'accès de l'élément de sécurité portable (12) depuis l'équipement de service (16) à l'appareil de télécommunication (10), l'identifiant d'accès étant représenté sur un équipement d'affichage (30) de l'appareil de télécommunication (10).

2. Procédé selon la revendication 1, **caractérisé en ce que** l'interface radio est, lors de la première liaison de communication (20), une liaison de communication en champ proche.

3. Procédé selon la revendication 1 ou 2, **caractérisé en ce que** la transmission des données spécifiques à l'élément de sécurité à l'appareil de télécommunication (10) a lieu de manière cryptée.

4. Procédé selon une des revendications précédentes, **caractérisé en ce que** l'équipement de service (16) comprend un opérateur de téléphonie mobile et/ou un fabricant ou gestionnaire d'éléments de sécurité portables.

5. Procédé selon une des revendications précédentes, **caractérisé en ce que** les données spécifiques à l'appareil de télécommunication comprennent les MSISDN, les IMEI et/ou les IMSI de l'appareil de télécommunication (10), en particulier d'une carte SIM agencée dedans.

6. Procédé selon une des revendications précédentes, **caractérisé en ce que** la transmission de l'identifiant d'accès de l'élément de sécurité portable (12) à l'appareil de télécommunication (10) a lieu de manière cryptée.

7. Procédé selon une des revendications précédentes, **caractérisé en ce que** l'identifiant d'accès est mémorisé dans un environnement sécurisé de l'appareil de télécommunication (10).

8. Procédé selon la revendication 7, **caractérisé en ce que**, pour l'appel de l'identifiant d'accès mémorisé, l'établissement de la première liaison de communication (20) entre l'appareil de télécommunication (10) et l'élément de sécurité portable (12) par l'intermédiaire de l'interface radio est nécessaire.

9. Procédé selon une des revendications précédentes, **caractérisé en ce que**, avant la transmission des données spécifiques à l'élément de sécurité et/ou des données spécifiques à l'appareil de télécommunication à l'équipement de service (16), une authentification est nécessaire.
